# EUROPÄISCHE PATENTSCHRIFT

(11) **EP 2 910 165 B1**
(45) Veröffentlichungstag und Bekanntmachung des Hinweises auf die Patenterteilung: **13.07.2016**
(21) Anmeldenummer: 15000389.5
(22) Anmeldetag: 10.02.2015
(51) Int. Cl.: A47L 1/09

(54) **Reinigungsgerät**
Cleaning device
Appareil de nettoyage

(30) Priorität: 25.02.2014 DE 102014002442
(43) Veröffentlichungstag der Anmeldung: 26.08.2015
(73) Patentinhaber: Tunze Aquarientechnik GmbH, 82377 Penzberg (DE)
(72) Erfinder: Tunze, Felix, 82377 Penzberg (DE); Tunze, Axel, 82377 Penzberg (DE)
(74) Vertreter: Grättinger Möhring von Poschinger Patentanwälte Partnerschaft

(56) Entgegenhaltungen:
- DE-U1- 9 105 938
- DE-U1-202011 050 822
- US-A1- 2008 163 444

## Beschreibung

Die Erfindung betrifft ein Reinigungsgerät zur Reinigung der Rückseite einer Scheibe, insbesondere einer Aquariumsscheibe, mit einem Bedienkörper und einem zum Bedienkörper separaten Reinigungskörper, welcher einen Grundkörper und zwei an gegenüberliegenden Enden des Grundkörpers angeordnete Klingen aufweist, wobei der Bedienkörper und der Reinigungskörper mittels geeignet angeordneter Magnetelemente durch die Scheibe hindurch in magnetische Wechselwirkung bringbar sind, so dass der an der Rückseite der Scheibe angeordnete Reinigungsköper mittels des korrespondierend hierzu an der Vorderseite der Scheibe angeordneten Bedienkörpers unter Anpressung der Reinigungskanten beider Klingen an die Rückseite der Scheibe entlang der Scheibe führbar ist.

Derartige Reinigungsgeräte sind aus dem Stand der Technik bereits hinlänglich bekannt. So zeigt beispielsweise die DE 91 05 938 U1 ein gattungsgemäßes Reinigungsgerät zur Reinigung von schlecht bzw. nicht zugänglichen Rückseiten von Scheiben, insbesondere Aquarienscheiben, bei dem an dem dortigen Reinigungskörper ("Sekundärteil"), welcher aufgrund magnetischer Anziehungskraft mit einem an der Scheibenvorderseite manuell führbaren Bedienkörper ("Primärteil") mitbewegt wird, wenigstens zwei Klingen in Art von Messerscheiden angebracht sind. Dieses Reinigungsgerät ist im Hinblick auf das damit erzielbare Reinigungsergebnis jedoch nicht optimal an die Beseitigung von verschiedenen Arten an Scheibenverschmutzungen angepasst.

Vor diesem Hintergrund ist es die Aufgabe der vorliegenden Erfindung, ein Reinigungsgerät der eingangs genannten Art dahingehend zu verbessern, dass sich damit auch bei unterschiedlichen Arten von Verschmutzungen der Scheibenrückseite, wie sie insbesondere in Aquarien vorkommen, eine möglichst einfache und schnelle Scheibenreinigung mit verbessertem Reinigungsergebnis erzielen lässt.

Diese Aufgabe wird durch ein Reinigungsgerät gemäß Anspruch 1 gelöst.

Das erfindungsgemäße Reinigungsgerät zeichnet sich neben den eingangs genannten Merkmalen dadurch aus, dass die zwei Klingen unterschiedlich lang sind, wobei durch geeignete Gestaltung und Anordnung der Klingen und/oder der Magnetelemente die kürzere der beiden Klingen mit ihrer Reinigungskante einen höheren Anpressdruck auf die Scheibe ausübt als die längere der beiden Klingen.

Dadurch dass im Rahmen der vorliegenden Erfindung zwei unterschiedlich lange Klingen Verwendung finden, von denen die kürzere der beiden Klingen (bei bestimmungsgemäßer Anordnung von Bedien- und Reinigungskörper auf Scheibenvorder- und - rückseite) mit ihrer Reinigungskante einen höheren Anpressdruck gegen die zu reinigende Scheibenrückseite ausübt als die längere der beiden Klingen, erhält man ein zur Entfernung verschiedener Arten von Verschmutzungen besonders flexibles und einfach zu bedienendes Reinigungsgerät.

Insbesondere kann dabei die längere der beiden Klingen, welche erfindungsgemäß einen geringeren Anpressdruck gegen die zu reinigende Scheibenrückseite ausübt, unter geeigneter Bewegung des Reinigungskörpers gewissermaßen zur schnellen, großflächigen Grobreinigung der Scheibenrückseite von leichten Verunreinigungen benutzt werden, während die kürzere der beiden Klingen, welche einen höheren Anpressdruck gegen die Scheibenrückseite ausübt, zur gezielten und häufig ohnehin nur punktuell notwendigen Entfernung hartnäckiger Verschmutzungen Verwendung finden kann.

Dies erweist sich insbesondere bei der Verwendung eines erfindungsgemäßen Reinigungsgeräts zur Reinigung der (innerhalb des Aquariums und unter Wasser befindlichen) Rück- bzw. Innenseiten von Aquarienscheiben als besonders vorteilhaft, da sich dort - hinsichtlich ihrer Entfernbarkeit - unterschiedliche Arten von Verunreinigungen absetzen. Hierzu zählen insbesondere vergleichweise leicht zu entfernende Verunreinigungen, wie z.B. Algen, die in der Regel locker an der Aquariumsscheibe anhaften, aber auch hartnäckigere Verunreinigungen, wie z.B. Kalkalgen, die in der Regel fest an Aquarienscheiben anhaften und daher eher schwer von dieser zu lösen sind.

Es versteht sich von selbst, dass der erfindungsgemäß für die beiden (unterschiedlich langen) Klingen zu realisierende unterschiedliche Anpressdruck gegen die zu reinigende Scheibe auf verschiedene Art und Weise hergestellt werden kann. Im einfachsten Fall kann sich dabei bei einer die beiden Klingen mit (im Wesentlichen) gleicher Kraft gegen die Scheibe ziehenden Anordnung der Magnetelemente in Bedien- und Basiskörper der unterschiedlich hohe Anpressdruck durch unterschiedlich große Kontaktflächen der jeweiligen Klingenkanten mit der Scheibe einstellen. Die unterschiedlich großen Kontaktflächen können sich dabei - bei ansonsten identisch gestalteter Klingenkante - durch die unterschiedliche Länge der Klingenkanten der ohnehin verschieden langen Klingen ergeben. Ferner kann im Rahmen der vorliegenden Erfindung vorgesehen sein, den unterschiedlichen Anpressdruck auf die verschieden langen Klingen durch eine geeignet asymmetrische Anordnung und/oder Ausgestaltung der Magnetelemente in Bedien- und/oder Reinigungskörper einzustellen bzw. zu verstärken.

Geeignete Magnetelemente zur Verwendung in einem erfindungsgemäßen Reinigungsgerät sind aus dem Stand der Technik hinlänglich bekannt, wobei aus Gründen der Einfachheit insbesondere die Verwendung wenigstens eines in oder an dem Bedienkörper und/oder Reinigungskörper angeordneten Permanentmagneten in Frage kommt, der mit (wenigstens) einem korrespondierend hierzu angeordneten Permanentmagnet und/oder ferromagnetischem Material in dem auf der anderen Scheibenseite anzuordnenden Reinigungs- bzw. Bedienkörper zur Erzielung einer geeigneten Anziehungskraft wechselwirkt.

Gemäß einer ersten vorteilhaften Ausgestaltung der Erfindung kann vorgesehen sein, dass die zwei Klingen an gegenüberliegenden Seiten des Grundkörpers des Reinigungskörpers angeordnet sind, wobei die beiden Klingen mit ihren parallelen Reinigungskanten jeweils in voneinander abweisender Richtung gegen die zu reinigende Scheibe angestellt sind.

Hierdurch ergibt sich eine besonders einfache und intuitive Bedienbarkeit des erfindungsgemäßen Reinigungsgeräts, indem der Reinigungskörper zum effizienten Einsatz der verschiedenen Klingen einfach mittels des an der Scheibenvorderseite (manuell) bewegten Bedienkörpers in entgegengesetzte Richtungen bewegt werden muss, wobei zum Zwecke der schnellen Grobreinigung die längere der beiden Klingen - bezogen auf die Bewegungsrichtung des Reinigungskörpers - nach schräg vorne weist, während zum Zwecke der einfacheren Entfernung hartnäckigeren Schmutzes der Reinigungskörper so orientiert und geführt werden kann, dass dann die kürzere der beiden Klingen - bezogen auf die Bewegungsrichtung des Reinigungskörpers - nach schräg vorne weist.

Eine besonders bevorzugte Ausgestaltung eines erfindungsgemäßen Reinigungskörpers sieht vor, dass die Reinigungskante der kürzeren der beiden Klingen eine kleinere Kontaktfläche mit der zu reinigenden Scheibe ausbildet als die Reinigungskante der längeren der beiden Klingen. Hierdurch kann, wie dies bereits weiter oben erläutert wurde, auf besonders einfache Weise dafür Sorge getragen sein, dass die Reinigungskanten der beiden Klingen mit im erfindungsgemäßen Sinne unterschiedlichen Anpressdruck auf die Scheibe einwirken.

Wenngleich im Rahmen der vorliegenden Erfindung grundsätzlich auch denkbar ist, dass der Grundkörper z.B. mit einem zwischen den beiden Klingen angeordneten Reinigungsschwamm der zu reinigenden Scheibe anliegt, so ist in besonders bevorzugter Weiterbildung der Erfindung vorteilhaft vorgesehen, dass der Grundkörper bei an der Scheibe anliegenden Reinigungskanten der zwei Klingen um wenigstens 2 mm, nochmals bevorzugt um wenigstens 3 mm, besonders bevorzugt um ca. 3,5 - 4 mm, von der Scheibe beabstandet ist. Damit ergibt sich zwischen der zu reinigenden Ebene, an welcher die Kontaktflächen der Klingen der Scheibe aufliegen, und dem übrigen Grundkörper ein Spalt von wenigstens 2 mm Breite, so dass im Einsatz des Reinigungsgerätes, das heißt wenn die Klingen im erfindungsgemäßen Sinne an die zu reinigende Rückseite einer (Aquariums)Scheibe gepresst sind und der Reinigungskörper über die Scheibe bewegt wird, stets ein entsprechender Mindestabstand zwischen dem Grundkörper und der zu reinigenden Scheibenrückseite gewährleistet ist. Hierdurch kann insbesondere vermieden werden, dass sich kleinere Partikel, wie beispielsweise aufgewirbelte Sandkörner oder dergleichen, zwischen dem Grundkörper und der zu reinigenden Scheibe festsetzen und diese bei Verschieben des Reinigungskörpers zerkratzen. Hierbei kann der Mindestabstand zwischen Grundkörper und Scheibe bevorzugt in Abhängigkeit von der Korngröße des in dem jeweiligen Aquarium vorgesehenen Bodengrunds gewählt werden.

Weiterhin kann bei geeigneter Beabstandung des Grundkörpers von der zu reinigenden Scheibe mit geeignet entfernt voneinander befindlichen Klingen in vorteilhafter Weise auch eine Reinigung von gewölbten Scheiben erfolgen.

Eine weitere vorteilhafte Ausführungsform der Erfindung sieht vor, dass die Klingen aus Kunststoff bestehen. Kunststoffklingen aus geeigneten Hochleistungskunststoffen, die z.B. zur Erzielung einer geeigneten Reinigungskante mit einer Schräge von 50° - 60°, vorzugsweise einer 55°-Schräge, versehen sein können, erweisen sich als besonders verschleißfest und weniger gefährlich in ihrer Handhabung. Im Übrigen kann durch den Einsatz von Kunststoffklingen ein Verkratzen der zu reinigenden Innenseite besonders sicher vermieden werden.

Weiterhin kann im Rahmen der Erfindung bevorzugt auch vorgesehen sein, dass die verschiedenen Klingen aus verschiedenen Materialien hergestellt sind, wobei in besonders vorteilhafter Weise ein der beiden Klingen (z.B. die kürzere oder die längere Klinge) aus Metall und die andere Klinge aus Kunststoff bestehen kann. Hierdurch können in vorteilhafter Weise besonders hartnäckig und fest an der Innenseite anhaftende Verschmutzungen besonders gründlich mit der Metallklinge entfernt werden, während mittels der Kunststoffklinge insbesondere leichte, weniger fest an der Innenseite haftende Verunreinigungen vergleichsweise schonend entfernbar sind.

Von Vorteil ist ferner, wenn die zwei Klingen austauschbar und/oder gefedert am Grundkörper des Reinigungskörpers befestigt sind. Gegebenenfalls kann ein erfindungsgemäßes Reinigungsgerät auch als Set mit Austauschklingen aus unterschiedlichen Materialien angeboten werden, was die möglichst vielseitige Verwendbarkeit des erfindungsgemäßen Reinigungsgeräts weiter erhöht, insbesondere wenn sich hierunter wenigstens eine kürzere Klinge aus Metall und eine längere Klinge aus Kunststoff befinden.

Gemäß einer weiteren bevorzugten Ausführungsform der Erfindung kann vorgesehen sein, dass sich die seitliche Kontur von wenigstens einer der beiden Klingen auf beiden Seiten der Klinge mittels eines in die Reinigungskante übergehenden, gerundeten Abschnitts (in Richtung zur Scheibe) verjüngt.

Die Verwendung entsprechend ausgestalteter Klingen hat den Vorteil, dass die Reinigungskante solcher Klingen nicht bis an den seitlichen Rand der Klinge reicht, so dass die Klinge in ihrem seitlichem Randbereich infolge des gerundeten Abschnitts von der zu reinigenden Scheibe beabstandet ist. Hierdurch können Beschädigungen der randseitigen (Silikon-)Dichtung zwischen den z.B. rechtwinklig einander angrenzenden Scheiben eines Aquariums vermieden werden, wenn die Klinge seitlich an den mit der Dichtung versehenen Rand der Scheibe geführt wird. Ferner haben Versuche gezeigt, dass ein erfindungsgemäßer Reinigungskörper, der mit Klingen mit einer solchen Rundung an den Klingenseiten ausgestattet ist, hierdurch sogar innerhalb eines Aquariums um eine darin befindliche Innenecke herumgeführt werden kann, jedenfalls wenn die Magnetkraft zwischen Bedienkörper und Reinigungskörper geeignet hoch ist, um beim Herumführen des Bedienkörpers um die Aussenkante des Aquariums den Magnetkontakt zwischen Bedien- und Reinigungskörper nicht zu verlieren.

Und schließlich kann im Rahmen der Erfindung noch vorteilhaft vorgesehen sein, dass der Grundkörper länglich ausgebildet ist, wobei die Klingen an gegenüberliegenden (Längs-)Enden des Grundkörpers angeordnet und mit ihren Klingenkanten quer zur Längsorientierung des Grundkörpers orientiert sind und wobei der Grundkörper in seiner parallel zu den Klingenkanten liegenden Quererstreckung schmaler als die Klingen ist. Ein derart schlank geformter Reinigungskörper weist einen besonders geringen Strömungswiderstand auf, wodurch insbesondere unter Wasser eine besonders leichte Verschiebbarkeit des Reinigungskörpers auf der Innenseite der Aquariumsscheibe ermöglicht werden kann.

Im Folgenden wird ein Ausführungsbeispiel der Erfindung anhand der Zeichnung näher erläutert. Dabei zeigt
- Fig. 1: eine Draufsicht auf den scheibenrückseitig anzuordnenden Reinigungskörper eines Ausführungsbeispiels eines erfindungsgemäßen Reinigungsgeräts,
- Fig. 2: eine Draufsicht auf den scheibenvorderseitig anzuordnenden Bedienkörper eines Ausführungsbeispiels eines erfindungsgemäßen Reinigungsgeräts,
- Fig. 3: eine Seitenansicht auf das in den Fig. 1 und 2 dargestellte Ausführungsbeispiel eines erfindungsgemäßen Reinigungsgeräts inkl. Scheibe gemäß Pfeil III aus Fig. 1 und
- Fig. 4: eine Seitenansicht auf das in den Fig. 1 und 2 dargestellte Ausführungsbeispiel eines erfindungsgemäßen Reinigungsgeräts inkl. Scheibe gemäß Pfeil IV aus Fig. 1.

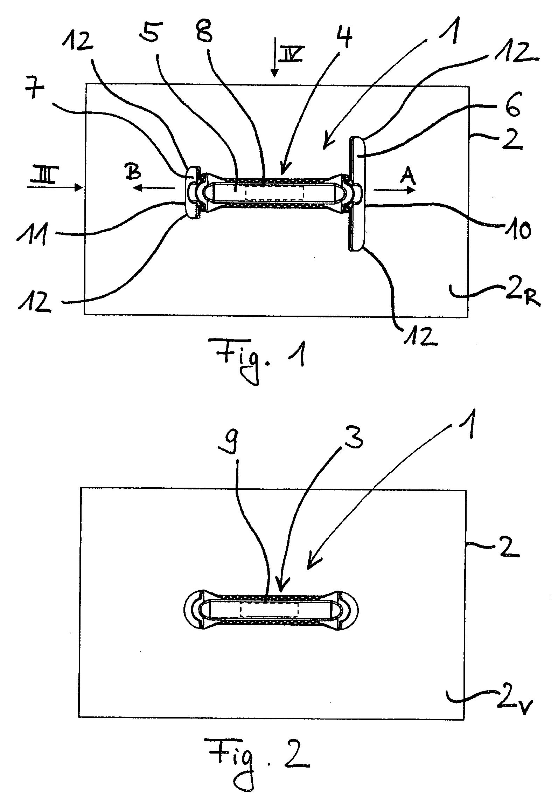

Die Fig. 1 bis 4 zeigen in unterschiedlichen Ansichten ein Ausführungsbeispiel eines erfindungsgemäßen Reinigungsgeräts 1 zur Reinigung der Rückseite 2_{R} einer Scheibe 2 mit einem Bedienkörper 3 und einem zum Bedienkörper 3 separaten Reinigungskörper 4, welcher einen Grundkörper 5 und zwei an gegenüberliegenden Enden des Grundkörpers 5 angeordnete und zur Reinigung der Scheibe 2 dienende Klingen 6, 7 aufweist.

In dem z.B. aus Kunststoff bestehenden Gehäuse des Bedienkörpers 3 und des Reinigungskörpers 4 sind, wie dies in den Fig. 1 und 2 gestrichelt angedeutet ist, in zueinander korrespondierender Anordnung Magnetelemente 8 und 9 verbaut, die aufgrund geeigneter Dimensionierung durch die Scheibe 2 hindurch eine so große Anziehungskraft zwischen Bedienkörper 3 und Reinigungskörper 4 erzeugen, dass (bei zueinander korrespondierender Anordnung) der Reinigungskörper 4 mit seinen beiden Klingen 6, 7 bzw. deren Reinigungskanten 10, 11 und der Bedienkörper 3 gegen die ihnen jeweils zugewandte Scheibenrückseite 2_{R} bzw. Scheibenvorderseite 2_{V} gehalten werden. Durch manuelle Führung des Bedienkörpers 3 über die Scheibenvorderseite 2_{V} kann dann der mit seinen Klingen 6, 7 der Scheibenrückseite 2_{R} anliegende Reinigungskörper 4 zu Reinigungszwecken bewegt werden.

Die längliche Ausgestaltung des Grundkörpers 5, der in seiner Quererstreckung sogar schmaler als die kürzere der beiden Klingen 6, 7 ist, reduziert dessen Strömungswiderstand unter Wasser, was insbesondere beim Einsatz des erfindungsgemäßen Reinigungsgeräts zur Reinigung von Aquarienscheiben von Vorteil ist.

Aufgrund der weitgehend symmetrischen Anordnung der - in den Fig. 1 und 2 nur beispielhaft und schematisch angedeuteten - Magnetelemente 8, 9 im Bedienkörper 3 und Reinigungskörper 4 werden die beiden Klingen 6, 7 mit im Wesentlichen gleicher Kraft gegen die Scheibenrückseite 2_{R} gezogen. Da jedoch die in Fig. 1 links dargestellte Klinge 7 deutlich kürzer als die in Fig. 1 rechts dargestellte Klinge 6 ist (mit entsprechend kürzerer Reinigungskanten 11 und einer entsprechend kleineren Kontaktfläche mit der Scheibe 2), übt die kürzere Klinge 7 auf die zu reinigende Scheibenrückseite 2_{R} - wegen der physikalischen Beziehung: Druck = Kraft / Fläche - einen größeren Anpressdruck auf die Scheibe 2 aus als die längere Klinge 6. Wie bereits weiter oben erläutert, kann dieses Ergebnis ggfs. ergänzend oder alternativ z.B. auch durch eine geeignet asymmetrische Gestaltung und/oder Anordnung der Magnetelemente 8, 9 bzw. Klingen 6, 7 erzielt werden.

Zur (Grob-)Reinigung der Scheibenrückseite 2_{R} mittels der längeren Klinge 6 wird der Reinigungskörper 4 - durch geeignete Führung des scheibenvorderseitig angeordneten Bedienkörpers 3 - bei der in Fig. 1 gegebenen Orientierung vorteilhaft gemäß Pfeil A nach rechts bewegt, so dass die lange Klinge 6 in Bewegungsrichtung nach schräg vorne unten angestellt ist. Zur bestmöglichen Reinigung der Scheibenrückseite 2_{R} von hartnäckigen Verschmutzungen erfolgt bei der in Fig. 1 gegebenen Orientierung des Reinigungskörpers vorteilhaft eine Bewegung nach links gemäß Pfeil B, wobei der Reinigungskörper 4 mittels des Bedienkörpers 3 selbstverständlich auch auf der Scheibe 2 gedreht und/oder in seiner Querrichtung verschoben werden kann, um - unter jeweils geeigneter Orientierung und Bewegungsrichtung - die gesamte Scheibenrückseite 2_{R} mit der hierfür jeweils am Besten geeigneten Klinge 6, 7 von Verschmutzungen zu befreien.

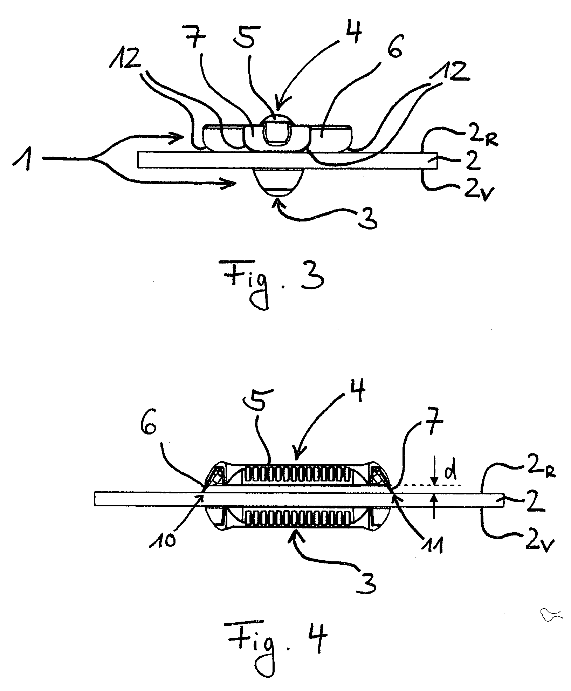

In den Figuren 1 und 3 ist außerdem gut zu erkennen, dass sich die seitliche Kontur beider Klingen 6, 7 auf beiden Seiten der jeweiligen Klinge 6, 7 mittels eines in die jeweilige Reinigungskante 10, 11 übergehenden, gerundeten Abschnitts 12 zur Scheibe hin verjüngt, womit insbesondere Beschädigungen von etwaigen Dichtungen an Innenecken eines Aquariums vermieden werden können.

In Fig. 4 ist schließlich noch zu erkennen, dass der Grundkörper 5 des Reinigungskörpers 4 bei an der Scheibe 2 anliegenden Reinigungskanten 10, 11 der zwei Klingen 6, 7 um einen Abstand d von vorteilhaft wenigstens 3 mm von der Scheibe beabstandet ist und dass die beiden Klingen 6, 7 mit ihren parallelen Reinigungskanten 10, 11 jeweils in voneinander abweisender Richtung nach schräg unten gegen die zu reinigende Scheibe (2) angestellt sind.

## Patentansprüche

1. Reinigungsgerät (1) zur Reinigung der Rückseite (2_{R}) einer Scheibe (2) mit
- einem Bedienkörper (3) und
- einem zum Bedienkörper (3) separaten Reinigungskörper (4), welcher einen Grundkörper (5) und zwei daran angeordnete Klingen (6, 7) aufweist,
wobei der Bedienkörper (3) und der Reinigungskörper (4) mittels geeignet angeordneter Magnetelemente (8, 9) durch die Scheibe (2) hindurch in magnetische Wechselwirkung bringbar sind, so dass der an der Rückseite (2R) der Scheibe (2) angeordnete Reinigungsköper (4) mittels des korrespondierend hierzu an der Vorderseite (2_{V}) der Scheibe (2) angeordneten Bedienkörpers (3) unter Anpressung der Reinigungskanten (10, 11) beider Klingen (6, 7) an die Rückseite (2_{R}) der Scheibe (2) entlang der Scheibe (2) führbar ist,
**dadurch gekennzeichnet,**
**dass** die zwei Klingen (6, 7) unterschiedlich lang sind, wobei durch geeignete Gestaltung und Anordnung der Klingen (6, 7) und/oder der Magnetelemente (8, 9) die kürzere der beiden Klingen (7) mit ihrer Reinigungskante (11) einen höheren Anpressdruck auf die Scheibe (2) ausübt als die längere der beiden Klingen (6).

2. Reinigungsgerät (1) nach Anspruch 1,
**dadurch gekennzeichnet,**
**dass** die zwei Klingen (6, 7) an gegenüberliegenden Seiten des Grundkörpers (5) des Reinigungskörpers (4) angeordnet sind, wobei die beiden Klingen (6, 7) mit ihren parallelen Reinigungskanten (10, 11) jeweils in voneinander abweisender Richtung gegen die zu reinigende Scheibe (2) angestellt sind.

3. Reinigungsgerät (1) nach Anspruch 1 oder 2,
**dadurch gekennzeichnet,**
**dass** die Reinigungskante (11) der kürzeren der beiden Klingen (6, 7) eine kleinere Kontaktfläche mit der zu reinigenden Scheibe (2) ausbildet als die Reinigungskante (12) der längeren der beiden Klingen (6, 7).

4. Reinigungsgerät (1) nach Anspruch 1 oder 2,
**dadurch gekennzeichnet,**
**dass** der Grundkörper (5) bei an der Scheibe (2) anliegenden Reinigungskanten (10, 11) der zwei Klingen (6,7) um wenigstens 2 mm von der Scheibe beabstandet ist.

5. Reinigungsgerät (1) nach einem der vorstehenden Ansprüche,
**dadurch gekennzeichnet,**
**dass** die Klingen (6, 7) aus Kunststoff bestehen.

6. Reinigungsgerät (1) nach einem der Ansprüche 1-4,
**dadurch gekennzeichnet,**
**dass** eine der Klingen (6, 7) aus Metall und die andere Klinge (7, 6) aus Kunststoff besteht.

7. Reinigungsgerät (1) nach einem der vorstehenden Ansprüche,
**dadurch gekennzeichnet,**
**dass** die zwei Klingen (6, 7) austauschbar am Grundkörper (5) des Reinigungskörpers (4) befestigt sind.

8. Reinigungsgerät (1) nach einem der vorstehenden Ansprüche,
**dadurch gekennzeichnet,**
**dass** sich die seitliche Kontur von wenigstens einer der beiden Klingen (6, 7) auf beiden Seiten der Klinge (6, 7) mittels eines in die Reinigungskante (10, 11) übergehenden, gerundeten Abschnitts (12) verjüngt.

9. Reinigungsgerät (1) nach einem der vorstehenden Ansprüche, **dadurch gekennzeichnet,**
**dass** der Grundkörper (5) länglich ausgebildet ist, wobei die Klingen (6, 7) an gegenüberliegenden Enden des Grundkörpers (5) angeordnet und mit ihren Klingenkanten (10, 11) quer zur Längsorientierung des Grundkörpers (5) orientiert sind und wobei der Grundkörper (5) in seiner parallel zu den Klingenkanten (10, 11) liegenden Quererstreckung schmaler als die Klingen (6, 7) ist.

## Claims

1. A cleaning device (1) for cleaning the back side (2R) of a panel (2), with
- a control member (3) and
- a cleaning member (4), which is separate from the control member (3) and which has a base member (5) and two blades (6, 7) disposed at opposite ends thereof,
wherein the control member (3) and the cleaning member (4) can be made to interact magnetically through the panel (2) by means of appropriately disposed magnetic elements (8, 9), so that the cleaning member (4) disposed on the back side (2R) of the panel (2) can be guided along the panel (2) while pressing the cleaning edges (10, 11) of both blades (6, 7) on the back side (2R) of the panel (2) by means of the control member (3) disposed in a manner corresponding to it on the front side (2V) of the panel (2), and
wherein the two blades (6, 7) are of different lengths and, by suitable geometry and arrangement of the blades (6, 7) and/or of the magnetic elements (8, 9), the shorter (7) of the two blades exerts a greater pressing force on the panel (2) with its cleaning edge (11) than does the longer of the two blades (6).

2. The cleaning device (1) of claim 1, wherein the two blades (6, 7) are disposed on opposite sides of the base member (5) of the cleaning member (4), wherein the two blades (6, 7) are pressed against the panel (2) to be cleaned in such a way that their cleaning edges (10, 11) are parallel but respectively angled in mutually opposite directions.

3. The cleaning device (1) of claim 1 or 2, wherein the cleaning edge (11) of the shorter of the two blades (6, 7) forms a smaller area of contact with the panel (2) to be cleaned than does the cleaning edge (12) of the longer of the two blades (6, 7).

4. The cleaning device (1) of claim 1 or 2, wherein the base member (5) is spaced apart from the panel by at least 2 mm while the cleaning edges (10, 11) of the two blades (6, 7) are bearing on the panel (2).

5. The cleaning device (1) according to one of the preceding claims, wherein the blades (6, 7) are made of plastic.

6. The cleaning device (1) according to one of claims 1 to 4, wherein one of the blades (6, 7) is made of metal and the other blade (7, 6) of plastic.

7. The cleaning device (1) according to one of the preceding claims, wherein the two blades (6, 7) are attached replaceably to the base member (5) of the cleaning member (4).

8. The cleaning device (1) according to one of the preceding claims, wherein the lateral contour of at least one of the two blades (6, 7) tapers on both sides of the blade (6, 7) by means of a rounded portion (12) merging into the cleaning edge (10, 11).

9. The cleaning device (1) according to one of the preceding claims, wherein the base member (5) has an elongated structure, wherein the blades (6, 7) are disposed at opposite ends of the base member (5) and are oriented with their blade edges (10, 11) transverse relative to the longitudinal orientation of the base member (5), and wherein the base member (5) is narrower than the blades (6, 7) in its transverse extent oriented parallel to the blade edges (10, 11).

## Revendications

1. Dispositif de nettoyage (1) destiné à nettoyer la face arrière (2_{R}) d'une vitre (2), avec
- un corps de commande (3) et
- un corps de nettoyage (4) séparé du corps de commande (3), lequel comporte un corps de base (5) et deux lames (6, 7) montées sur celui-ci,
dans lequel le corps de commande (3) et le corps de nettoyage (4) peuvent être mis en interaction magnétique à travers la vitre (2) au moyen d'éléments magnétiques (8, 9) disposés de façon appropriée, de telle façon que le corps de nettoyage (4) disposé sur la face arrière (2_{R}) de la vitre (2) peut être guidé le long de la vitre (2) au moyen du corps de commande (3) disposé de façon correspondante sur la face avant (2_{V}) de la vitre (2), par application des arêtes de nettoyage (10, 11) des deux lames (6, 7) sur la face arrière (2_{R}) de la vitre (2),
**caractérisé en ce que**
les deux lames (6, 7) présentent des longueurs différentes, la plus courte des deux lames (7) exerçant avec son arête de nettoyage (11) une pression d'application plus forte sur la vitre (2) que la plus longue des deux lames (6), de par une conception et une disposition appropriées des lames (6, 7) et/ou des éléments magnétiques (8, 9).

2. Dispositif de nettoyage (1) selon la revendication 1,
**caractérisé en ce que**
les deux lames (6, 7) sont disposées sur des côtés opposés du corps de base (5) du corps de nettoyage (4), les deux lames (6, 7) étant appliquées respectivement avec leurs arêtes de nettoyage (10, 11) parallèles dans des directions détournées l'une de l'autre contre la vitre (2) à nettoyer.

3. Dispositif de nettoyage (1) selon la revendication 1 ou 2,
**caractérisé en ce que**
l'arête de nettoyage (11) de la plus courte des deux lames (6, 7) forme une surface de contact plus petite avec la vitre (2) à nettoyer que l'arête de nettoyage (12) de la plus longue des deux lames (6, 7).

4. Dispositif de nettoyage (1) selon la revendication 1 ou 2,
**caractérisé en ce que**
le corps de base (5) est espacé d'au moins 2 mm de la vitre lorsque les arêtes de nettoyage (10, 11) des deux lames (6, 7) sont appliquées sur la vitre (2).

5. Dispositif de nettoyage (1) selon l'une des revendications précédentes,
**caractérisé en ce que**
les lames (6, 7) sont constituées de plastique.

6. Dispositif de nettoyage (1) selon l'une des revendications 1-4,
**caractérisé en ce que**
l'une des lames (6, 7) est constituée de métal et l'autre lame (7, 6) est constituée de plastique.

7. Dispositif de nettoyage (1) selon l'une des revendications précédentes,
**caractérisé en ce que**
les deux lames (6, 7) sont fixées de façon interchangeable sur le corps de base (5) du corps de nettoyage (4).

8. Dispositif de nettoyage (1) selon l'une des revendications précédentes,
**caractérisé en ce que**
le contour latéral d'au moins l'une des deux lames (6, 7) s'affine des deux côtés de la lame (6, 7) au moyen d'une section arrondie (12) précédant l'arête de nettoyage (10, 11).

9. Dispositif de nettoyage (1) selon l'une des revendications précédentes, **caractérisé en ce que**
le corps de base (5) est conçu oblong, les lames (6, 7) étant disposées à des extrémités opposées du corps de base (5) et orientées avec leurs arêtes de nettoyage (10, 11) transversalement à l'orientation longitudinale du corps de base (5), et le corps de base (5) étant plus étroit que les lames (6, 7) dans son étendue transversale s'étendant parallèlement aux arêtes de nettoyage (10, 11).
